# EUROPÄISCHE PATENTANMELDUNG

(11) **EP 1 829 662 A1**
(43) Veröffentlichungstag der Anmeldung: **05.09.2007**
(21) Anmeldenummer: 06004273.6
(22) Anmeldetag: 02.03.2006
(51) Int. Cl.: B29C 45/16, B29C 45/00

(54) **Bauteil mit zwei Komponenten und Steckverbindungselement**

(71) Anmelder: Delphi Technologies, Inc., Troy, MI 48007 (US)
(72) Erfinder: Lübstorf, Mario, 42489 Wülrath (DE)
(74) Vertreter: Manitz, Finsterwald & Partner GbR

(57) **Zusammenfassung**

Die Erfindung betrifft ein Bauteil (10) mit wenigstens zwei Komponenten (12,20), die über eine Gelenkverbindung miteinander verbunden sind, wobei die Gelenkverbindung (30,32) aus einem weicheren Material gefertigt ist als zumindest eine der durch sie miteinander verbundenen Komponenten. Die Erfindung betrifft weiterhin ein Steckverbindungselement (10), das durch ein erfindungsgemäßes Bauteil gebildet ist.

## Beschreibung

Die Erfindung betrifft ein Bauteil mit wenigstens zwei Komponenten, die über eine Gelenkverbindung miteinander verbunden sind, und ein Steckverbindungselement, das durch ein solches Bauteil gebildet ist.

Insbesondere im automobilen Bereich ist es oftmals notwendig, zwei Komponenten eines Bauteils gelenkig miteinander zu verbinden. So sind oftmals Buchsen vorgesehen, in die bei einem automatisierten Diagnoseprozess Verbindungsstecker zum Diagnosecomputer eingesteckt werden. Ist die Buchse gerade nicht in Benutzung, muss sie abgedeckt sein, um gegen Verschmutzungen oder Feuchtigkeit geschützt zu sein. Dazu werden Kappen aufgesetzt.

Damit die Kappe fest mit der Buchse verbunden ist und nicht verloren gehen kann, ist es vorteilhaft, sie nicht einzeln vorzusehen, sondern über eine Gelenkverbindung mit der Buchse zu verbinden. Zum Beispiel bei Verwendung von Kunststoffkomponenten können hier Filmscharniere zum Einsatz kommen.

Die Filmscharniere sind oftmals sehr starr und lassen ein Öffnen der Kappe nur gegen einen hohen federnden Widerstand zu. Gerade beim Einstecken eines Steckers in die Buchse kann dies behindernd wirken. Insbesondere bei Verwendung bei sehr niedrigen Temperaturen kann es außerdem aufgrund der kältebedingten Verhärtung zum Bruch eines Filmscharniers kommen.

Aufgabe der vorliegenden Erfindung ist es, ein Bauteil mit zwei Komponenten anzugeben, die über eine Gelenkverbindung miteinander verbunden sind, wobei die Gelenkverbindung unempfindlich sein soll.

Diese Aufgabe wird durch ein Bauteil mit den Merkmalen des Anspruchs 1 gelöst. Unteransprüche sind auf bevorzugte Ausführungsformen gerichtet. Besonders vorteilhafte Ausgestaltungen umfassen ein Steckverbindungselement gemäß Anspruch 10 oder Anspruch 11.

Das erfindungsgemäße Bauteil weist eine Gelenkverbindung zwischen der ersten und zweiten Komponente auf, die aus einem weicheren Material gefertigt ist als zumindest eine der durch sie miteinander verbundenen Komponenten.

Mindestens eine der beiden durch die Gelenkverbindung miteinander verbundenen Komponenten ist dementsprechend aus einem härteren Material gefertigt, um ausreichende mechanische Stabilität aufzuweisen, obwohl die Gelenkverbindung selbst weicher und flexibler ist. Umfasst die Komponente aus härterem Material z.B. die Buchse einer Steckverbindung, so wird das Material so gewählt, dass ausreichende mechanische Stabilität für den Einsteckprozess vorhanden ist. Andererseits gewährleistet die weichere und flexiblere Gelenkverbindung ein einfaches und komfortables gegenseitiges Klappen der beiden Komponenten und ein auf Grund der größeren Flexibilität geringeres Bruchrisiko.

Eine einfache Herstellung ist möglich, wenn die Gelenkverbindung und eine erste der beiden Komponenten, die durch sie miteinander verbunden sind, aus demselben Material gefertigt sind und die zweite Komponente aus einem anderen Material, wobei das Material der Gelenkverbindung und der ersten Komponente weicher ist als das Material der zweiten Komponente. Bei einer solchen Ausgestaltung ist an der Verbindung nur eine Stelle mit einem Materialwechsel vorhanden.

Besonders vorteilhaft ist es jedoch, wenn die Gelenkverbindung aus einem weicheren Material gefertigt ist als beide Komponenten, die von ihr miteinander verbunden sind. Bei einer solchen Ausgestaltung ist nur die Gelenkverbindung selbst durch das weichere Material gebildet und die beiden Komponenten sind aus härterem Material gefertigt, das eine hohe Stabilität zur Verfügung stellt. Kostengünstig ist es dabei, wenn die beiden Komponenten aus einem gleichen Material gefertigt sein.

Einfach zu verarbeiten und im Betrieb problemlos sind Ausgestaltungen, bei denen die Gelenkverbindung Kunststoff, vorzugsweise thermoplastisches Elastomer (TPE) oder Silikon, umfasst.

Das Material der wenigstens einen Komponente, die aus härterem Material gefertigt ist als die Gelenkverbindung, kann ebenfalls Kunststoff umfassen.

Insbesondere, wenn beide Komponenten und die Gelenkverbindung aus Kunststoff bestehen, kann das Bauteil ein Spritzgussteil umfassen. Um die unterschiedlichen Materialien der Gelenkverbindung und der zwei durch sie miteinander verbundenen Komponenten zu realisieren, wird bei einer bevorzugten Ausgestaltung ein Zweikomponenten-Spritzgussverfahren eingesetzt.

Besonders einfach ist eine Ausgestaltung, bei der die Gelenkverbindung wenigstens ein Filmscharnier umfasst.

Die Erfindung lässt sich bei Bauteilen einsetzen, bei denen zwei Komponenten, von denen zumindest eine eine höhere Stabilität umfassen soll, durch eine belastbare und sichere Gelenkverbindung verbunden sein sollen, z.B. eine Box mit einem Deckel. Insbesondere ist dies z.B. vorteilhaft, wenn eine der beiden Komponenten eine Kappe umfasst, die zur Abdeckung der anderen Komponente dient.

Die Erfindung betrifft weiterhin ein Steckverbindungselement, das durch ein erfindungsgemäßes Bauteil gebildet ist und z.B. eine Buchse umfasst, die durch eine Kappe abdeckbar ist, wobei die Buchse und die Kappe über eine Gelenkverbindung, insbesondere wenigstens ein Filmscharnier, miteinander verbunden sind.

Die Erfindung wird anhand der beiliegenden Figuren im Detail erläutert, die eine Ausgestaltung eines erfindungsgemäßen Bauteils in Form eines Steckverbindungselementes darstellen. Dabei zeigt
- Fig. 1: ein erfindungsgemäßes Steckverbindungselement mit geöffneter Kappe und
- Fig. 2: das Steckverbindungselement mit geschlossener Kappe.

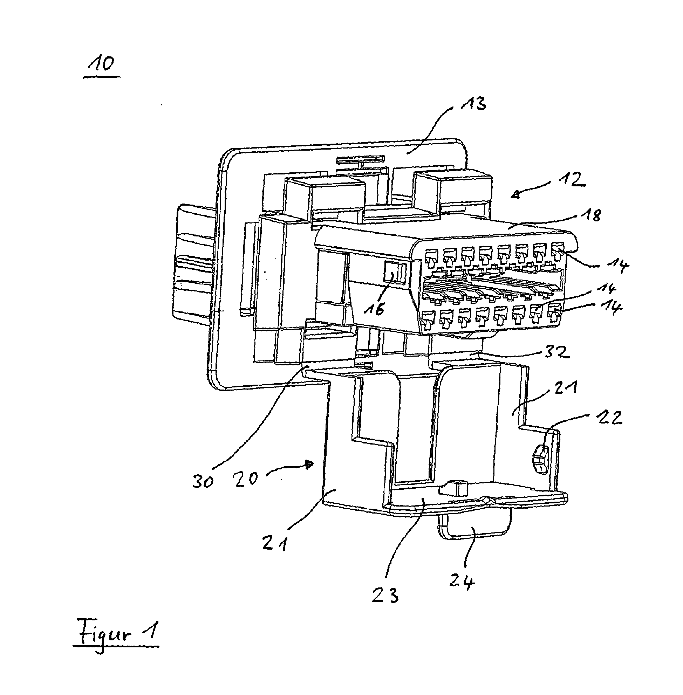

Die Figuren zeigen ein Steckverbindungselement 10 aus Kunststoff. Es umfasst eine Komponente in Form einer Buchse 12 und eine weitere Komponente in Form einer Kappe 20. Bei der gezeigten Ausführungsform umfasst die Buchse 12 in an sich bekannter Weise eine rückwärtige Befestigungsplatte 13 und eine Steckeraufnahme 18 zum Einstecken eines Steckers. Die Steckeraufnahme weist Kontaktaufnahmen 14 auf, in denen Kontaktelemente vorgesehen sind, die mit entsprechenden Kontakten eines eingesteckten Steckers elektrische Verbindungen zur Verfügung stellen können. An den seitlichen Außenseiten der Kontaktaufnahme 18 sind Vertiefungen 16 vorgesehen, von denen in der perspektivischen Ansicht der Fig. 1 nur eine sichtbar ist.

Aus demselben Material wie die Buchse 12 ist die Kappe 20 gebildet. An deren Seitenwänden 21 sind nach innen weisende Vorsprünge 22 vorgesehen, von denen in der perspektivischen Darstellung der Fig. 1 nur einer sichtbar ist. An dem Frontabschluß 23 der Kappe 20 ist an dessen Außenseite ein Griff 24 vorgesehen.

Die Kappe 20 ist über Filmscharniere 30, 32 mit der Buchse 12 verbunden. Die Filmscharniere 30, 32 sind aus weicherem Kunststoffmaterial gefertigt als sowohl die Kappe 20 als auch die Buchse 12. Insbesondere sind die Filmscharniere z.B. entweder aus thermoplastischem Elastomer (TPE) oder Silikon gefertigt.

Das erfindungsgemäße Steckverbindungselement wird z.B. im Zweikomponenten-Spritzgussverfahren hergestellt. Zunächst wird das härtere Kunststoffmaterial in eine Form eingespritzt, die sowohl die Buchse 12, die Kappe 20 als auch die Gelenkverbindungen 30, 32 umfasst. Zum Beispiel mit einem Stift wird aus dem so gespritzten Material noch in der Form derjenige Bereich, der den Gelenkverbindungen 30, 32 entspricht, entfernt. Hier wird jetzt das weichere Kunststoffmaterial, z.B. TPE oder Silikon eingespritzt.

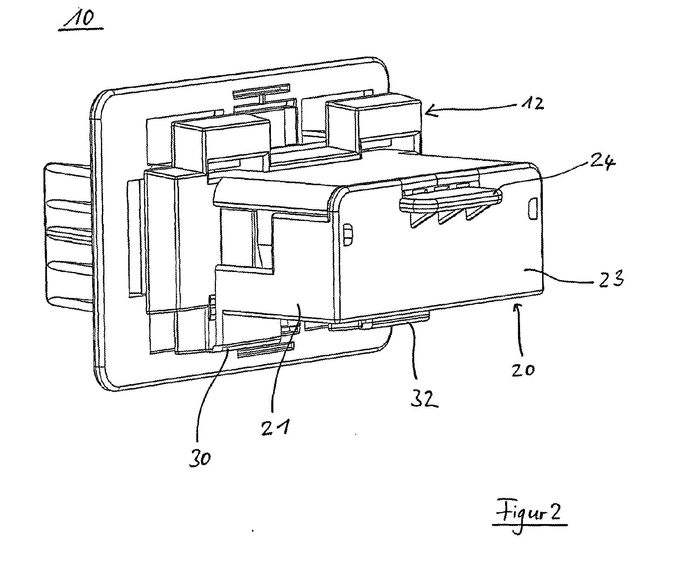

Das erfindungsgemäße Steckverbindungselement wird wie folgt verwendet. Im geschlossenen Zustand, der in Fig. 2 gezeigt ist, sind die Kontaktaufnahmen 14 der Steckeraufnahme 18 abgedeckt und gegen Verunreinigung oder Feuchtigkeitseintritt geschützt. Die Kappe wird in der geschlossenen Stellung durch das Zusammenwirken der Vorsprünge 22 an den Innenseiten der Kappenwände 21 mit den Vertiefungen 16 an den Seitenwänden der Steckeraufnahme 18 gehalten. Soll die Buchse 12 mit einem Stecker verbunden werden, so wird an dem Griff 24 der Kappe 20 die Kappe aufgeklappt. Dabei wirken die Filmscharniere 30, 32 als Gelenkverbindung, so dass die Kappe 20 in der in Fig. 1 und 2 gewählten Darstellung nach unten weggeklappt werden kann. Jetzt kann ein Stecker in die Steckeraufnahme 18 der Buchse 12 eingesteckt werden.

Aufgrund der weicheren Gelenkverbindungen 30, 32 ist die Verbindung weniger starr als bei bekannten Steckverbindungen, so dass die Kappe 20 den Einsteckprozess eines Steckers in die Steckeraufnahme 18 nicht z.B. durch ein Zurückfedern der Kappe 20 behindert.

### Bezugszeichenliste

- 10: Steckverbindungselement
- 12: Buchse
- 13: Befestigungsplatte
- 14: Kontaktaufnahme
- 16: Vertiefung
- 18: Steckeraufnahme
- 20: Kappe
- 21: Seitenwand der Kappe
- 22: Vorsprung
- 23: Frontabschluss der Kappe
- 24: Griff
- 30, 32: Filmscharniere

## Patentansprüche

1. Bauteil mit wenigstens zwei Komponenten (12, 20), die über eine Gelenkverbindung (30, 32) miteinander verbunden sind,
**dadurch gekennzeichnet, dass**
die Gelenkverbindung (30, 32) aus einem weicheren Material gefertigt ist als zumindest eine der durch sie miteinander verbundenen Komponenten (12, 20).

2. Bauteil nach Anspruch 1, **dadurch gekennzeichnet, dass** die Gelenkverbindung (30, 32) aus einem weicheren Material gefertigt ist als beide Komponenten (12, 20), die von ihr miteinander verbunden sind.

3. Bauteil nach Anspruch 2, **dadurch gekennzeichnet, dass** die von der Gelenkverbindung (30, 32) miteinander verbundenen Komponenten (12, 20) aus dem gleichen Material gefertigt sind.

4. Bauteil nach Anspruch 1, **dadurch gekennzeichnet, dass** die Gelenkverbindung und eine der beiden Komponenten, die durch sie miteinander verbunden sind, aus demselben ersten Material gefertigt sind, wobei das erste Material weicher ist, als das zweite Material, aus dem die zweite Komponente gefertigt ist.

5. Bauteil nach einem der Ansprüche 1 bis 4, **dadurch gekennzeichnet, dass** das weichere Material Kunststoff, vorzugsweise thermoplastisches Elastomer (TPE) oder Silikon, umfasst.

6. Bauteil nach einem der Ansprüche 1 bis 5, **dadurch gekennzeichnet, dass** das Material der wenigstens einen Komponente (12, 20), die aus härterem Material als die Gelenkverbindung (30, 32) gefertigt ist, Kunststoff umfasst.

7. Bauteil nach einem der Ansprüche 1 bis 6, **dadurch gekennzeichnet, dass** die wenigstens zwei Komponenten (12, 20) und die Gelenkverbindung (30, 32) aus einem vorzugsweise in einem Zweikomponentenspritzgussverfahren hergestellten Spritzgussteil bestehen.

8. Bauteil nach einem der Ansprüche 1 bis 7, **dadurch gekennzeichnet, dass** die Gelenkverbindung wenigstens ein Filmscharnier (30, 32) umfasst.

9. Bauteil nach einem der Ansprüche 1 bis 8, **dadurch gekennzeichnet, dass** eine erste der beiden durch die Gelenkverbindung (30, 32) miteinander verbundenen Komponenten eine Kappe (20) für die zweite Komponente (12) umfasst.

10. Steckverbindungselement (10), das durch ein Bauteil nach einem der Ansprüche 1 bis 9 gebildet ist.

11. Steckverbindungselement (10), das durch ein Bauteil nach Anspruch 9 gebildet ist, wobei die zweite Komponente eine Buchse (12) umfasst, die durch die die Kappe (20) bildende erste Komponente abdeckbar ist.
